# EUROPEAN PATENT APPLICATION

(11) **EP 1 684 511 A2**
(43) Date of publication of application: **26.07.2006**
(21) Application number: 06001461.0
(22) Date of filing: 24.01.2006
(51) Int. Cl.: H04N 5/76, G11B 31/00

(54) **Videocassette recorder integrated optical disk apparatus and video signal apparatus**

(30) Priority: 25.01.2005 JP 2005000280 U
(71) Applicant: Funai Electric Co., Ltd., Daito Osaka (JP)
(72) Inventor: Higuchi, Yoshio, Osaka (JP)
(74) Representative: Grünecker, Kinkeldey, Stockmair & Schwanhäusser Anwaltssozietät

(57) **Abstract**

There is provided a video signal apparatus capable of preventing a vertical wobble of the screen from causing discomfort to users. The video signal apparatus comprises: a first signal switching section 11 for switching between a first solid video signal 41 that includes a synchronizing signal having the same timing as a synchronizing signal of a first video signal 31 as well as represents a solid image and the first video signal 31; and a second signal switching section 12 for switching between a second solid video signal that includes a synchronizing signal having the same timing as a synchronizing signal of a second video signal as well as represents a solid image and the second video signal, the apparatus being adapted to output the first solid video signal (second solid video signal) from an output changeover switch 3 for a predetermined time period immediately after the switching to subsequently switch to the first video signal (second video signal) when a video signal to be output from the output changeover switch 3 is switched from the second video signal (first video signal) to the first video signal (second video signal).

## Description

### BACKGROUND OF THE INVENTION

### 1. Field of the Invention

The present invention relates to a videocassette recorder integrated optical disk apparatus and a video signal apparatus comprising an output changeover switch for switching an output video signal between a first video signal and a second video signal, and more specifically to a videocassette recorder integrated optical disk apparatus and a video signal apparatus adapted to output a video signal that represents a solid image for a predetermined time period immediately after switching an output video signal from a first video signal to a second video signal or from a second video signal to a first video signal.

### 2. Description of the Prior Art

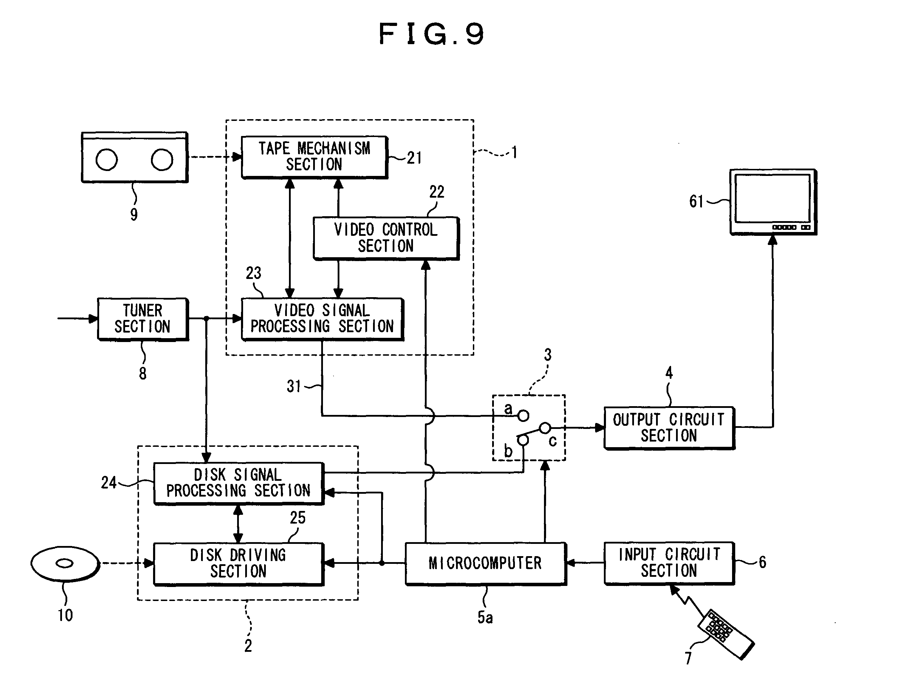

In a videocassette recorder integrated optical disk apparatus, which can record a video signal onto a videocassette tape and/or a DVD, there is provided a tape recording and reproducing section 1 for recording and reproducing a video signal using a videocassette tape (hereinafter referred to as videotape) 9 as a recording medium and a disk recording and reproducing section 2 for recording and reproducing a video signal using a DVD 10 as a recording medium as shown in Fig.9. Then, an output changeover switch 3 is adapted to select one of video signals output, respectively, from the tape recording and reproducing section 1 and the disk recording and reproducing section 2 in accordance with an instruction from a microcomputer 5a, and to send the selected one to an output circuit section 4 (hereinafter referred to as first conventional art).

The following art has also been proposed (hereinafter referred to as second conventional art). That is, the art is adapted to perform signal processing on a horizontal and vertical composite synchronizing signal (hereinafter referred to simply as composite synchronizing signal) for an indicator and on an integrated signal of the composite synchronizing signal. That is, there is provided a first logic circuit for outputting an H level when a composite synchronizing signal is changed from H to L level and an integrated signal of the composite synchronizing signal is at L level. There is also provided a second logic circuit for outputting an L level when a composite synchronizing signal is changed from L to H level and an output of the first logic circuit is at H level. There is further provided a third logic circuit for outputting an L level when a composite synchronizing signal is at L level and an output of the first logic circuit is at L level. There is also provided a fourth logic circuit for outputting an H level when an output of the second logic circuit and an output of the third logic circuit are both at H level. That is, the first to fourth logic circuits are provided to generate a composite synchronizing signal with the width of a vertical synchronizing signal being corrected. Therefore, the indicator can generate a blocking signal for blocking display based on the corrected composite synchronizing signal output from the fourth logic circuit. Then, using the corrected composite synchronizing signal allows the generated blocking signal to reliably block the display of a pixel that is not allowed to be displayed, whereby it is possible to eliminate the difficulty in viewing the screen due to the display of a pixel that is not allowed to be displayed (refer to Japanese Patent Laid-Open Publication No. 2002-182636 for example).

The following art has also been proposed (hereinafter referred to as third conventional art). That is, in a time-axis correction in a videocassette recorder, a signal reproduced by a rotating head is A/D converted to subsequently be written into a memory. Also, a signal written in the memory is read out and D/A converted to subsequently be output. It is further arranged that the writing operation and the reading operation with respect to the memory are performed in parallel. Therefore, if the memory has only a small storage capacity, there may occur a situation where a reading address overtakes a writing address or a writing address overtakes a reading address, resulting in a vertical wobble of the screen. There is thus provided means for controlling the rotation phase of the rotating head so that no reading address overtakes a writing address, which prevents the occurrence of a situation where a reading address overtakes a writing address or a writing address overtakes a reading address. It is therefore possible to prevent the occurrence of a vertical wobble of the screen (refer to Japanese Patent Laid-Open Publication No. Hei 11-136641 for example).

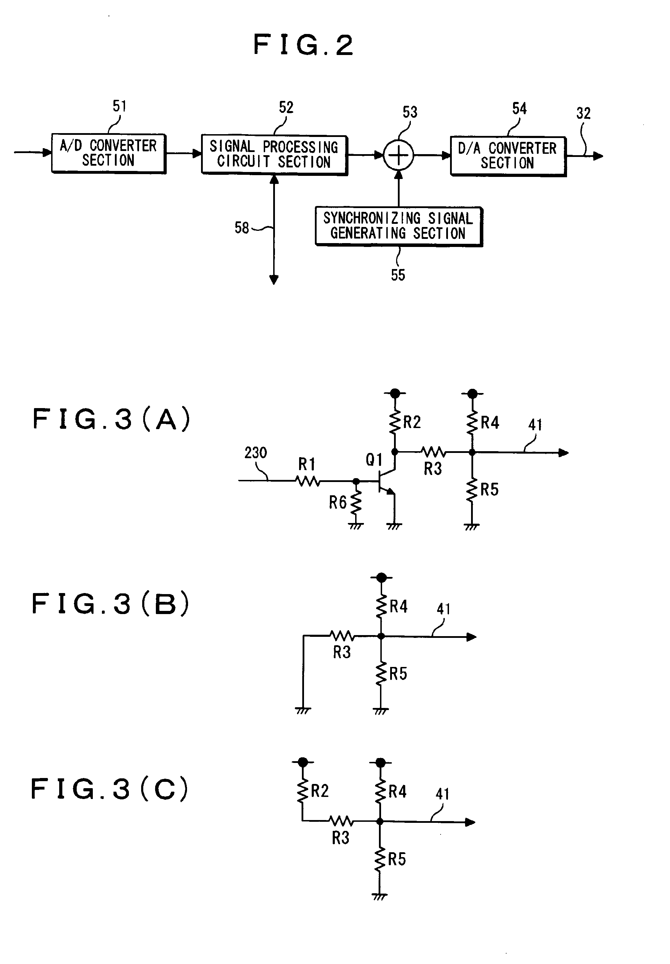

However, using the first conventional art suffers from the following problem. That is, in a stopping state or a recording state in the VCR mode, a video signal output from a tuner section 8 is guided to the output circuit section 4 through a video signal processing section 23 and the output changeover switch 3. Also, in a stopping state or a recording state in the DVD mode, a video signal output from the tuner section 8 is guided to the output circuit section 4 through a disk signal processing section 24 and the output changeover switch 3. Meanwhile, in the disk signal processing section 24, a video signal output from the tuner section 8 is A/D converted in an A/D converter section 51 to subsequently be subject to signal processing in a signal processing circuit section 52 as shown in Fig.2. The signal is then converted into an analog video signal in a D/A converter section 54 to be output to the output changeover switch 3. Therefore, a video signal output from the disk signal processing section 24 is delayed relative to the corresponding video signal input to the disk signal processing section 24 (at a delay time of about 50 to 100 ms). On the other hand, a video signal output from the video signal processing section 23 has an extremely small delay time relative to the corresponding video signal input to the video signal processing section 23.

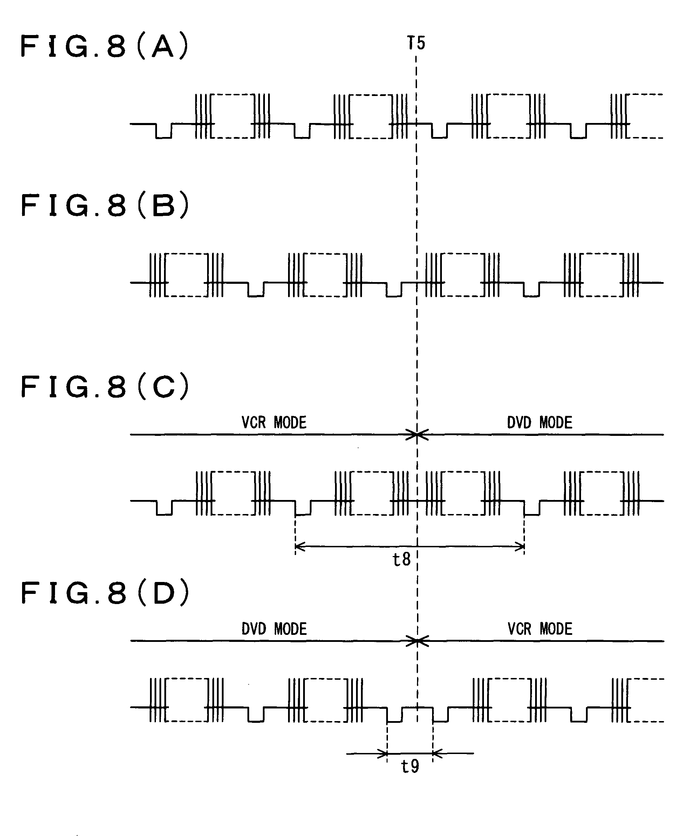

That is, in the case of representing a video signal output from the video signal processing section 23 by Fig.8 (A), a video signal output from the disk signal processing section 24 may be represented by Fig.8 (B) in a topological relationship between vertical synchronizing signals (no horizontal synchronizing signal during a vertical blanking time is shown in Fig.8 for easiness of viewing the figure). Therefore, in this case, if the mode is changed from VCR to DVD at a time T5 in a stopping state or a recording state with the power on, a video signal output from the output changeover switch 3 is to be represented as shown in Fig.8 (C), where the interval between vertical synchronizing signals (indicated by t8) around the time T5 is increased greater than a predetermined interval (approximately 16.7 ms). Also, if the mode is changed from DVD to VCR, a video signal output from the output changeover switch 3 is to be represented as shown in Fig.8 (D), where the interval between vertical synchronizing signals (indicated by t9) around the time T5 is reduced smaller than a predetermined interval (approximately 16.7 ms). Consequently, in a TV receiver 61 to which a video signal output from the output circuit section 4 is guided, there may occur a disturbance in following vertical synchronizing signals and thereby a vertical wobble of the screen immediately after the time T5, causing discomfort to users.

The second conventional art is adapted to prevent the display of a pixel that is not allowed to be displayed by generating a corrected composite synchronizing signal, which has difficulty in being applied from the viewpoint of solving the problem in the first conventional art.

The third conventional art is adapted to prevent a vertical wobble of the screen by controlling the rotation phase of the rotating head so that no reading address overtakes a writing address in the memory, which has difficulty in being applied from the viewpoint of solving the problem in the first conventional art.

### SUMMARY OF THE INVENTION

The present invention has been made to solve the above-described problems, and an object thereof is to provide a videocassette recorder integrated optical disk apparatus capable of: preventing a vertical wobble of the screen from causing discomfort to users by outputting a solid image for a predetermined time period immediately after switching from one to the other of two types of video signals; simplifying the configuration of a circuit for generating a video signal that represents a solid image so that a black solid image is output; suitably simplifying the configuration of the circuit for generating a video signal that represents a black solid image; and constructing the circuit for generating a video signal that represents a black solid image using one transistor and five resistors.

Another object of the present invention is to provide a videocassette recorder integrated optical disk apparatus adapted to output a solid image for a predetermined time period immediately after switching an output video signal from one to the other of video signals, respectively, from a tape recording and reproducing section and a disk recording and reproducing section, which makes a vertical wobble of the screen due to phase difference between vertical synchronizing signals of the video signals before and after the switching invisible, whereby it is possible to prevent a vertical wobble of the screen from causing discomfort to users.

It is also an object of the present invention, in addition to the foregoing objects, to provide a videocassette recorder integrated optical disk apparatus capable of simplifying the configuration of a circuit for generating a video signal that represents a solid image so that a black solid image is output.

It is a further object of the present invention, in addition to the foregoing objects, to provide a videocassette recorder integrated optical disk apparatus capable of suitably simplifying the configuration of the circuit for generating a video signal that represents a black solid image.

Still another object of the present invention is to provide a video signal apparatus adapted to output a solid image for a predetermined time period immediately after switching an output video signal from one to the other of first and second video signals, which makes a vertical wobble of the screen due to phase difference between vertical synchronizing signals of the video signals before and after the switching invisible, whereby it is possible to prevent a vertical wobble of the screen from causing discomfort to users.

In order to solve the above-described problems, the present invention is directed to a videocassette recorder integrated optical disk apparatus comprising: a tape recording and reproducing section for recording and reproducing a video signal using a videocassette tape as a recording medium; a disk recording and reproducing section for recording and reproducing a video signal using a DVD as a recording medium; and an output changeover switch including a first input terminal to which a first video signal output from the tape recording and reproducing section is guided and a second input terminal to which a second video signal output from the disk recording and reproducing section is guided, the switch being adapted to switch an output video signal between the first video signal and the second video signal. The apparatus further comprises: a first signal switching section for switching a signal to be sent to the first input terminal between a first solid video signal that includes a synchronizing signal having the same timing as a synchronizing signal of the first video signal as well as represents a black solid image and the first video signal; and a second signal switching section for switching a signal to be sent to the second input terminal between a second solid video signal that includes a synchronizing signal having the same timing as a synchronizing signal of the second video signal as well as represents a black solid image and the second video signal. Also, the first signal switching section is adapted to send the first solid video signal to the first input terminal for a predetermined time period to subsequently switch to the first video signal when a video signal to be output from the output changeover switch is switched from the second video signal to the first video signal, the second signal switching section is adapted to send the second solid video signal to the second input terminal for a predetermined time period to subsequently switch to the second video signal when a video signal to be output from the output changeover switch is switched from the first video signal to the second video signal, and the tape recording and reproducing section sends a digital level synchronizing signal, the level of which changes between H and L for digital signal circuits. The first signal switching section also comprises: a solid signal generating section for generating and sending the first solid video signal based on the digital level synchronizing signal; and a solid inserting switch for switching a signal to be sent to the first input terminal between the first solid video signal sent from the solid signal generating section and the first video signal. Further, the solid signal generating section comprises: a first resistor with the digital level synchronizing signal being guided to one end thereof; a transistor with the base connected with the other end of the first resistor and the emitter grounded; a second resistor connected between the collector of the transistor and a positive power supply; a third resistor with one end thereof connected to the collector of the transistor; a fourth resistor with one end thereof connected to the positive power supply and the other end thereof connected to the other end of the third resistor; and a fifth resistor with one end thereof grounded and the other end thereof connected to the other end of the third resistor, the first solid video signal being sent from the other end of the third resistor.

That is, when a video signal output from the output changeover switch is switched from a second video signal to a first video signal or from a first video signal to a second video signal, there may occur a short-time vertical wobble of the screen in a TV receiver due to phase difference between vertical synchronizing signals. However, the screen shows a black solid image during the time period of the vertical wobble, which makes the vertical wobble of the screen invisible. Also, there is no need to generate a color signal that represents the color of an image, and the first solid video signal can be obtained only by generating a video signal having a black brightness level. Further, since the digital level synchronizing signal, the level of which changes between H and L as digital level, serves as a signal required for rotation control of the rotating head and the capstan, there is no need to generate another signal. Therefore, the first solid video signal can be generated only by providing a circuit for correcting the level and/or the polarity of digital level synchronizing signals. In addition, the circuit for generating the first solid video signal is composed of one transistor and five resistors.

The present invention is also directed to a videocassette recorder integrated optical disk apparatus comprising: a tape recording and reproducing section for recording and reproducing a video signal using a videocassette tape as a recording medium; a disk recording and reproducing section for recording and reproducing a video signal using a DVD as a recording medium; and an output changeover switch including a first input terminal to which a first video signal output from the tape recording and reproducing section is guided and a second input terminal to which a second video signal output from the disk recording and reproducing section is guided, the switch being adapted to switch an output video signal between the first video signal and the second video signal. The apparatus further comprises: a first signal switching section for switching a signal to be sent to the first input terminal between a first solid video signal that includes a synchronizing signal having the same timing as a synchronizing signal of the first video signal as well as represents a solid image and the first video signal; and a second signal switching section for switching a signal to be sent to the second input terminal between a second solid video signal that includes a synchronizing signal having the same timing as a synchronizing signal of the second video signal as well as represents a solid image and the second video signal, the first signal switching section being adapted to send the first solid video signal to the first input terminal for a predetermined time period to subsequently switch to the first video signal when a video signal to be output from the output changeover switch is switched from the second video signal to the first video signal, and the second signal switching section being adapted to send the second solid video signal to the second input terminal for a predetermined time period to subsequently switch to the second video signal when a video signal to be output from the output changeover switch is switched from the first video signal to the second video signal.

That is, when a video signal output from the output changeover switch is switched from a second video signal to a first video signal or from a first video signal to a second video signal, there may occur a short-time vertical wobble of the screen in a TV receiver due to phase difference between vertical synchronizing signals. However, the screen shows a solid image during the time period of the vertical wobble, which makes the vertical wobble of the screen invisible.

Also, in addition to the above arrangement, the first solid video signal represents a black solid image and the second solid video signal also represents a black solid image. That is, there is no need to generate a color signal that represents the color of an image, and the first solid video signal can be obtained only by generating a video signal having a black brightness level.

Also, in addition to the above arrangement, the tape recording and reproducing section sends a digital level synchronizing signal, the level of which changes between H and L for digital signal circuits, and the first signal switching section comprises: a solid signal generating section for generating and sending the first solid video signal based on the digital level synchronizing signal; and a solid inserting switch for switching a signal to be sent to the first input terminal between the first solid video signal sent from the solid signal generating section and the first video signal. That is, since the digital level synchronizing signal, the level of which changes between H and L as digital level, serves as a signal required for rotation control of the rotating head and the capstan, there is no need to generate another signal. Therefore, the first solid video signal can be generated only by providing a circuit for correcting the level and/or the polarity of digital level synchronizing signals.

Further, in addition to the above arrangement, the solid signal generating section comprises: a first resistor with the digital level synchronizing signal being guided to one end thereof; a transistor with the base connected with the other end of the first resistor and the emitter grounded; a second resistor connected between the collector of the transistor and a positive power supply; a third resistor with one end thereof connected to the collector of the transistor; a fourth resistor with one end thereof connected to the positive power supply and the other end thereof connected to the other end of the third resistor; and a fifth resistor with one end thereof grounded and the other end thereof connected to the other end of the third resistor, the first solid video signal being sent from the other end of the third resistor. Therefore, the circuit for generating the first solid video signal can be composed of one transistor and five resistors.

The present invention is further directed to a video signal apparatus comprising an output changeover switch including a first input terminal to which a first video signal is guided and a second input terminal to which a second video signal is guided, the switch being adapted to switch an output video signal between the first video signal and the second video signal. The apparatus further comprises: a first signal switching section for switching a signal to be sent to the first input terminal between a first solid video signal that includes a synchronizing signal having the same timing as a synchronizing signal of the first video signal as well as represents a solid image and the first video signal; and a second signal switching section for switching a signal to be sent to the second input terminal between a second solid video signal that includes a synchronizing signal having the same timing as a synchronizing signal of the second video signal as well as represents a solid image and the second video signal, the first signal switching section being adapted to send the first solid video signal to the first input terminal for a predetermined time period to subsequently switch to the first video signal when a video signal to be output from the output changeover switch is switched from the second video signal to the first video signal, and the second signal switching section being adapted to send the second solid video signal to the second input terminal for a predetermined time period to subsequently switch to the second video signal when a video signal to be output from the output changeover switch is switched from the first video signal to the second video signal.

That is, when a video signal output from the output changeover switch is switched from a second video signal to a first video signal or from a first video signal to a second video signal, there may occur a short-time vertical wobble of the screen in a TV receiver due to phase difference between vertical synchronizing signals. However, the screen shows a solid image during the time period of the vertical wobble, which makes the vertical wobble of the screen invisible.

In accordance with the present invention, even when there may occur a short-time vertical wobble of the screen in a TV receiver due to phase difference between vertical synchronizing signals, the screen shows a black solid image during the time period of the vertical wobble, which makes the vertical wobble of the screen invisible. Also, the first solid video signal can be obtained only by generating a video signal having a black brightness level, with no need to generate a color signal. Further, since there is no need to generate another digital level synchronizing signal, the first solid video signal can be generated only by providing a circuit for correcting the level and/or the polarity of digital level synchronizing signals. In addition, the circuit for generating the first solid video signal is composed of one transistor and five resistors. It is therefore possible to: prevent a vertical wobble of the screen from causing discomfort to users; simplify the configuration of the circuit for generating a video signal that represents a solid image; suitably simplify the configuration of the circuit for generating a video signal that represents a black solid image; and construct the circuit for generating a video signal that represents a black solid image using one transistor and five resistors.

Also, in accordance with the present invention, even when there may occur a short-time vertical wobble of the screen in a TV receiver due to phase difference between vertical synchronizing signals, the screen shows a solid image during the time period of the vertical wobble, which makes it possible to prevent a vertical wobble of the screen from causing discomfort to users.

Further, the first solid video signal can be obtained only by generating a video signal having a black brightness level, with no need to generate a color signal, which makes it possible to simplify the configuration of the circuit for generating a video signal that represents a solid image.

Furthermore, since there is no need to generate another digital level synchronizing signal, the first solid video signal can be generated only by providing a circuit for correcting the level and/or the polarity of digital level synchronizing signals. It is therefore possible to suitably simplify the configuration of the circuit for generating a video signal that represents a black solid image.

### BRIEF DESCRIPTION OF THE DRAWINGS

Fig.1 is a block diagram showing the electrical configuration of a videocassette recorder integrated optical disk apparatus as an embodiment of a video signal apparatus according to the present invention;
Fig.2 is a block diagram showing the detailed electrical configuration of a signal processing section;
Fig.3 is a circuit diagram showing the detailed electrical connection of a solid signal generating section;
Fig.4 is a circuit diagram showing the detailed electrical connection of an output circuit section;
Fig.5 is a flow chart showing the main operation of the embodiment when the mode is changed from DVD to VCR;
Fig.6 is a flow chart showing the main operation of the embodiment when the mode is changed from VCR to DVD;
Fig.7 is an illustrative view showing the change of main signals;
Fig.8 is an illustrative view showing a phase shifting of vertical synchronizing signals when a video signal is switched; and
Fig.9 is a block diagram showing the electrical configuration of a conventional art.

### DESCRIPTION OF THE PREFERRED EMBODIMENTS

An embodiment of the present invention will hereinafter be described with reference to the accompanying drawings.

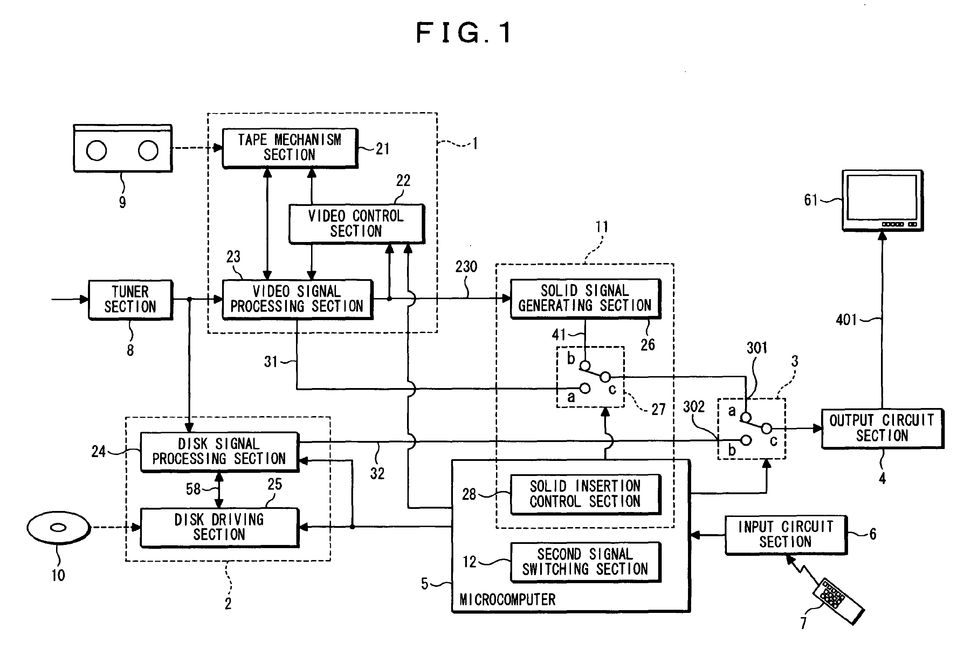

Fig.1 is a block diagram showing the electrical configuration of an embodiment of a video signal apparatus according to the present invention, and more specifically shows a videocassette recorder integrated optical disk apparatus. Also, blocks identical with those in the conventional art shown in Fig.9 are designated by the same reference numerals as in Fig.9.

The present embodiment mainly comprises: a tape recording and reproducing section 1; a disk recording and reproducing section 2; an output changeover switch 3; an output circuit section 4; a microcomputer 5; an input circuit section 6; a tuner section 8; and a first signal switching section 11 (the functions of which are partially executed by the microcomputer 5).

The tuner section 8 is adapted to receive commercial broadcasting of a channel indicated by the microcomputer 5. Then, the section sends a video signal obtained through the reception to the video signal processing section 23 and the disk signal processing section 24. The input circuit section 6 comprises a plurality of key switches (not shown in the figure) such as a power key provided on the front panel of the apparatus body and a light receiving unit (not shown in the figure) for receiving an infrared signal from a remote controller 7, and is adapted to receive an instruction from a user. The section also sends the input instruction to the microcomputer 5.

The tape recording and reproducing section 1 is adapted to record and reproduce a video signal using a videocassette tape (videotape) 9 as a recording medium. Therefore, the section comprises a tape mechanism section 21, a video control section 22, and a video signal processing section 23.

In more detail, the tape mechanism section 21 comprises a rotating head and a traveling mechanism section, which are not shown in the figure, to record a signal sent from the video signal processing section 23 onto the videotape 9. The section is also adapted to reproduce and send a signal recorded on the videotape 9 to the video signal processing section 23. The video control section 22 is adapted to control the operation as the tape recording and reproducing section 1. That is, the section controls the rotation of the rotating head and the capstan (not shown in the figure) in the tape mechanism section 21 based on a digital level synchronizing signal 230 (to be described hereinafter in detail) sent from the video signal processing section 23. The section is also adapted to control the operation of the video signal processing section 23.

In a recording operation, the video signal processing section 23 is adapted to output a signal (FM brightness signal and low frequency color signal) obtained by applying predetermined processing to a video signal output from the tuner section 8 (including an externally input video signal) to the tape mechanism section 21 to record the video signal onto the videotape 9. In a reproducing operation, the section is also adapted to send a video signal 31 obtained by applying predetermined processing to a signal reproduced from the videotape 9 in the tape mechanism section 21 to a contact "a" in a solid inserting switch 27. Meanwhile, in an operation other than a reproducing one (e.g. in a stopping state or a recording state with the power on), the section is adapted to send a video signal output from the tuner section 8 to the contact "a" in the solid inserting switch 27 as a first video signal 31.

The video signal processing section 23 is also adapted to send a digital level synchronizing signal 230 having the same timing as a synchronizing signal of the first video signal 31, the level of which changes between H and L for digital signal circuits, to the video control section 22 and a solid signal generating section 26.

The disk recording and reproducing section 2 is adapted to record and reproduce a video signal using a DVD (optical disk) 10 as a recording medium. Therefore, the section comprises a disk signal processing section 24 and a disk driving section 25.

As shown in Fig.2, the disk signal processing section 24 comprises an A/D converter section 51, a signal processing circuit section 52, an adder 53, a D/A converter section 54, and a synchronizing signal generating section 55, where the A/D converter section 51 is adapted to A/D convert a video signal output from the tuner section 8. The signal processing circuit section 52 is adapted to compress the A/D converted video signal by the MPEG 2 method (by the AC3 method in the case of an A/D converted audio signal). Then, the section sends video information (including audio information and/or subpicture information) obtained through the compression processing to the disk driving section 25 through a pathway 58.

The section is also adapted to expand video information (including audio information and/or subpicture information) sent from the disk driving section 25 through the pathway 58 by the MPEG 2 method (by the AC3 method in the case of audio information). The adder 53 is adapted to add a synchronizing signal generated in the synchronizing signal generating section 55 to a digital video signal obtained through the expansion processing. The D/A converter section 54 is adapted to convert the digital video signal with the synchronizing signal added thereto into an analog video signal (second video signal), and to output the signal to a second input terminal 302 (contact "b") in the output changeover switch 3.

It is noted that in a recording state or a stopping state with the power on, the disk signal processing section 24 is adapted to send a video signal output from the tuner section 8 (corresponding to the second video signal) to the second input terminal 302 in the output changeover switch 3, as is the case in the conventional art. However, thus output video signal (second video signal) has been A/D converted in the A/D converter section 51, processed in the signal processing circuit section 52, subsequently added with a synchronizing signal, and D/A converted in the D/A converter section 54. Therefore, the video signal output from the D/A converter section 54 is delayed relative to the corresponding video signal output from the tuner section 8 (at a delay time of about 50 to 100 ms).

Whatever kind of image a video signal output from the tuner section 8 may represent, the signal processing circuit section 52 is also adapted to generate and output a video signal that represents a black solid image to the adder 53 if there is given an instruction for outputting a black solid image from the microcomputer 5. Therefore, in this case, a video signal that represents a black solid image (second solid video signal according to the claims) is to be output from the D/A converter section 54.

The disk driving section 25 is adapted to record a signal obtained by applying predetermined processing to compressed video/audio information output from the disk signal processing section 24 onto the DVD 10. The section is also adapted to send video/audio information (compressed video/audio information) obtained by applying predetermined processing to a signal reproduced from the DVD 10 to the disk signal processing section 24.

The output changeover switch 3 is adapted to switch a video signal to be sent to the output circuit section 4 between a video signal (first video signal 31) output from the tape recording and reproducing section 1 and guided to the first input terminal 301 (contact "a") through the solid inserting switch 27 and a video signal output from the disk recording and reproducing section 2 and guided to the second input terminal 302 (contact "b") (through the pathway 32).

The first signal switching section 11 is adapted to send a first solid video signal 41 to the first input terminal 301 for a predetermined time period to subsequently switch to the first video signal 31 when a video signal to be sent from the output changeover switch 3 to the output circuit section 4 is switched from the second video signal input to the second input terminal 302 to the first video signal input to the first input terminal 301. Therefore, the section comprises a solid signal generating section 26, a solid inserting switch 27, and a solid insertion control section 28.

The solid signal generating section 26 is adapted to generate and output a first solid video signal 41 that includes a synchronizing signal having the same timing as a synchronizing signal of the first video signal 31 as well as represents a black solid image to the contact "b" in the solid inserting switch 27 based on the digital level synchronizing signal 230. The solid inserting switch 27 is adapted to switch a signal to be sent to the first input terminal 301 between the first solid video signal 41 sent from the solid signal generating section 26 and the first video signal 31. The solid insertion control section 28 is composed of a part of the functions of the microcomputer 5 to control the switching of the solid inserting switch 27.

The second signal switching section 12 is adapted to send a second solid video signal to the second input terminal 302 for a predetermined time period to subsequently switch to the second video signal when a video signal to be sent from the output changeover switch 3 is switched from the first video signal 31 to the second video signal. That is, when a video signal to be sent from the output changeover switch 3 is switched from the first video signal 31 to the second video signal, the section instructs the disk signal processing section 24 to output a video signal that represents a black solid image to send a second solid video signal that includes a synchronizing signal having the same timing as a synchronizing signal of the second video signal as well as represents a black solid image to the second input terminal 302. Then, after a time period of approximately 300 ms has passed, the section instructs the disk signal processing section 24 to output a normal video signal to send the second video signal to the second input terminal 302.

The microcomputer 5 is composed of the above-described solid insertion control section 28 and the second signal switching section 12, and is adapted to control the main operation as the videocassette recorder integrated optical disk apparatus, that is, to control a channel received by the tuner section 8. The microcomputer is also adapted to control the operation of the tape recording and reproducing section 1 in accordance with an instruction input to the remote controller 7, etc. by a user to make recording onto or reproduction from the videotape 9. The microcomputer is further adapted to control the operation of the disk recording and reproducing section 2 in accordance with an instruction input to the remote controller 7, etc. by a user to make recording onto or reproduction from the DVD 10.

The detailed electrical connection of the solid signal generating section 26 will hereinafter be described with reference to Fig.3.

As shown in Fig.3 (A), a first resistor R1 is adapted to guide the digital level synchronizing signal 230 to a transistor Q1 and to limit the base current of the transistor Q1. For this purpose, the digital level synchronizing signal 230 is guided to one end of the first resistor R1, while the other end of the first resistor R1 is connected to the base of the transistor Q1. Also, between the collector of the transistor Q1 and a positive power supply is connected a second resistor R2 as a load. In addition, the emitter of the transistor Q1 is grounded, and between the base of the transistor Q1 and the ground potential is connected a resistor R6 for suppressing the increase in base impedance.

Further, the collector of the transistor Q 1 is connected with one end of a third resistor R3, and between the other end of the third resistor R3 and the positive power supply is connected a fourth resistor R4, while between the other end of the third resistor R3 and the ground potential is connected a fifth resistor R5. The other end of the third resistor R3 is also connected to the contact "b" in the solid inserting switch 27 as a point for outputting a solid video signal (first solid video signal) 41.

Since the solid signal generating section 26 is thus arranged, when the digital level synchronizing signal 230 (positive logic synchronizing signal) becomes an H level that represents a synchronizing pulse (horizontal synchronizing pulse or vertical synchronizing pulse), the transistor Q1 turns on. Therefore, the connection becomes equivalently as shown in Fig.3 (B), so that the potential of the first solid video signal 41 is given as one in the case of connecting the third resistor R3 in parallel with the fifth resistor R5 of the voltage divider that is composed of the fourth resistor R4 and the fifth resistor R5. Also, when the digital level synchronizing signal 230 becomes an L level that does not represent a synchronizing pulse, the transistor Q1 turns off, and the connection becomes equivalently as shown in Fig.3 (C). Therefore, the potential of the first solid video signal 41 is given as one in the case of connecting the series circuit that is composed of the second resistor R2 and the third resistor R3 in parallel with the fourth resistor R4 of the voltage divider that is composed of the fourth resistor R4 and the fifth resistor R5.

Accordingly, the resistance of the second to fifth resistors R2 to R5 is preset so that the potential difference of the first solid video signal 41 between the cases as shown, respectively, in Figs.3 (B) and 3 (C) is equal to the amplitude of a synchronizing pulse of a signal having a predetermined amplitude as a composite video signal (having a peak-to-peak value of 2V).

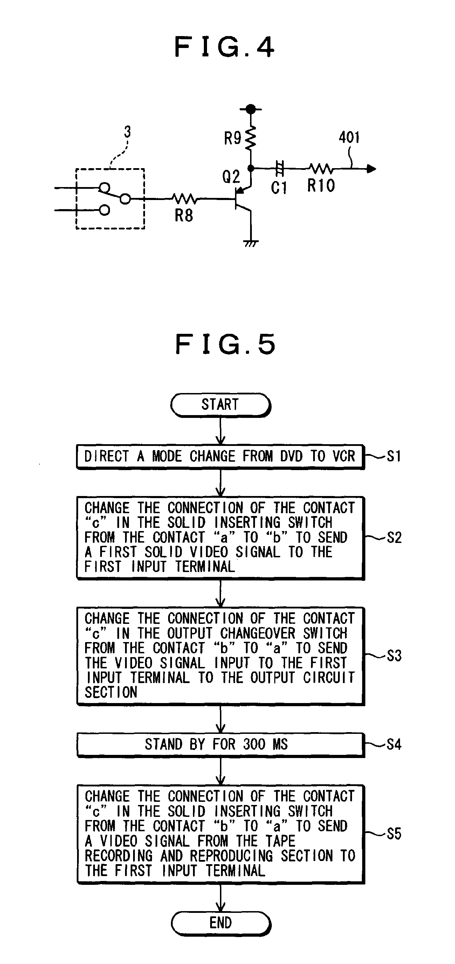

Fig.4 is a circuit diagram showing the detailed electrical connection of the output circuit section 4. Describing the output circuit section 4 with reference to the figure, an output of the output changeover switch 3 is guided to the base of a transistor Q2 through a resistor R8. Also, the collector of the transistor Q2 is grounded, while the emitter of the transistor Q2 is connected to a positive power supply through a resistor R9. In addition, the emitter of the transistor Q2 is connected with one end of a capacitor C1, while the other end of the capacitor C1 is connected to one end of a resistor R10 for setting output impedance. Then, the other end of the resistor R10 is connected to a terminal for outputting a video signal (not shown in the figure). It is noted that the resistance of the resistor R10 is 75⊐.

Since the output circuit section 4 is thus arranged, the output circuit section 4 sends a video signal output from the output changeover switch 3 outward as a signal having an output impedance of 75 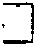 .

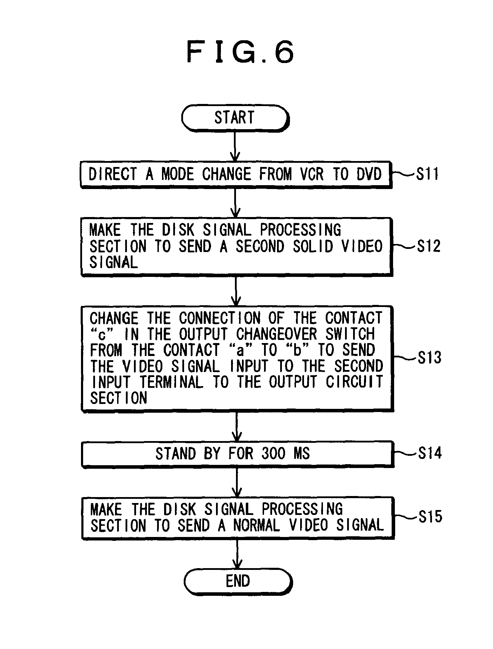

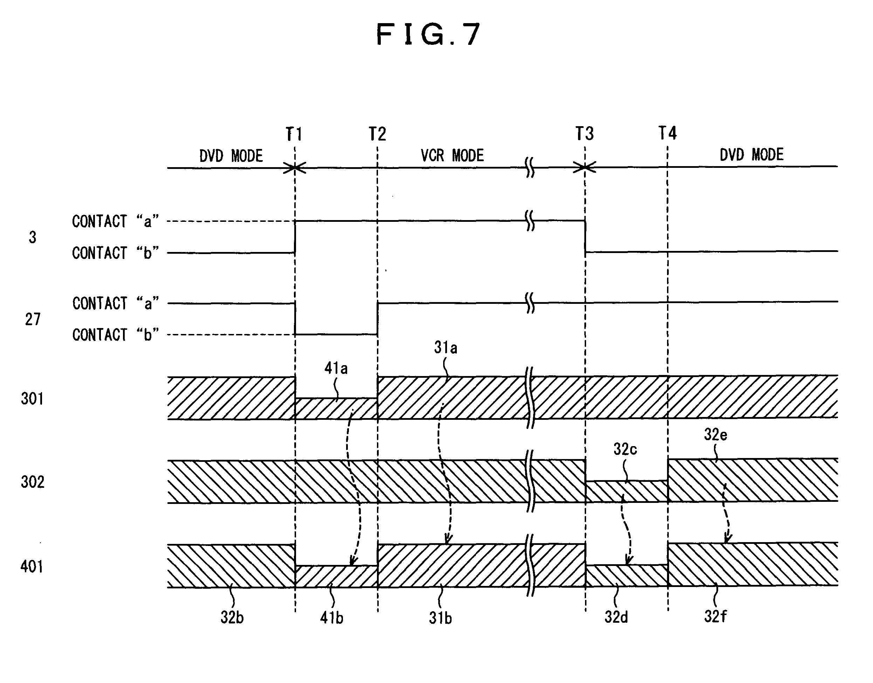

Fig.5 is a flow chart showing the main operation of the embodiment when the mode is changed from DVD to VCR; Fig.6 is a flow chart showing the main operation of the embodiment when the mode is changed from VCR to DVD; and Fig.7 is an illustrative view showing the change of main signals. The operation of the embodiment will be described with reference to these figures as appropriate.

It is here assumed that the operation is in a stopping state in the DVD mode. Therefore, in this case, the contact "c" is connected to the contact "a" in the solid inserting switch 27, and the contact "c" is connected to the contact "b" in the output changeover switch 3. Consequently, a video signal (first video signal 31) output from the tuner section 8 is guided to the first input terminal 301 through the video signal processing section 23 and the solid inserting switch 27. Also, a video signal (second video signal) output from the tuner section 8 is guided to the second input terminal 302 through the disk signal processing section 24.

However, the second video signal guided to the second input terminal 302, which has been subject to digital signal processing in the disk signal processing section 24, is delayed relative to the first video signal 31 guided to the first input terminal 301. That is, there is a mutual phase shifting of vertical synchronizing signals between the first video signal 31 guided to the first input terminal 301 and the second video signal guided to the second input terminal 302.

In the state above, when an instruction for changing the mode from DVD to VCR is input to the remote controller 7 (time T1), the solid insertion control section 28 changes the connection of the contact "c" in the solid inserting switch 27 from the contact "a" to "b" (steps S1 and S2). Consequently, a first solid video signal (indicated by the numeral 41a in Fig.7) is guided to the first input terminal 301 of the output changeover switch 3. Also, at the same time as the above-described operation, the connection of the contact "c" in the output changeover switch 3 is changed from the contact "b" to "a" (step S3). Consequently, the first solid video signal (indicated by the numeral 41b in Fig.7) is to be sent from the output circuit section 4.

It is noted that as described heretofore, since there is a phase shifting of vertical synchronizing signals between the second video signal (indicated by the numeral 32b) that has been sent from the output circuit section 4 before the time T1 and the first solid video signal 41b to be sent from the output circuit section 4 after the time T1, there may occur a vertical wobble of the screen in the TV receiver 61 for a time period of about 100 ms immediately after the time T1. However, since a black solid image is output in this case, the vertical wobble is made invisible, though there may be.

Then, after 300 ms has passed since the time T1 (time T2), the solid insertion control section 28 changes the connection of the contact "c" in the solid inserting switch 27 from the contact "b" to "a". Consequently, at the time T2, a first video signal (indicated by the numeral 31a) sent from the video signal processing section 23 is sent from the output circuit section 4 (indicated by the numeral 31b) (steps S4 and S5). Therefore, even when the mode is changed from DVD to VCR, there can occur no visible vertical wobble in the TV receiver 61, and a normal image is to be displayed after the time T2.

In the state above, when an instruction for changing the mode from VCR to DVD is input to the remote controller 7 (time T3), the second signal switching section 12 instructs the disk signal processing section 24 to switch an output video signal from a normal video signal (second video signal) to a second solid video signal (indicated by the numeral 32c) that represents a black solid image (steps S11 and S12). Also, at the same time as the above-described operation, the connection of the contact "c" in the output changeover switch 3 is changed from the contact "a" to "b" (step S13). Consequently, the second solid video signal (indicated by the numeral 32d) is to be sent from the output circuit section 4.

It is noted that as described heretofore, since there is a phase shifting of vertical synchronizing signals between the first video signal (indicated by the numeral 31b) that has been sent from the output circuit section 4 before the time T3 and the second solid video signal 32d to be sent from the output circuit section 4 after the time T3, there may occur a vertical wobble of the screen in the TV receiver 61 for a time period of about 100 ms immediately after the time T3. However, since a black solid image is output in this case, the vertical wobble is made invisible, though there may be.

Then, after 300 ms has passed since the time T3 (time T4), the second signal switching section 12 instructs the disk signal processing section 24 to switch an output video signal from the second solid video signal 32c to a second video signal that represents a normal image (indicated by the numeral 32e) (steps S14 and S15). Therefore, even when the mode is changed from VCR to DVD, there can occur no visible vertical wobble in the TV receiver 61, and a normal image (represented by a video signal 32f) is to be displayed after the time T4.

It is noted that the present invention is not restricted to the above-described embodiment, and that in the arrangement according to claim 6, the same applies to any apparatus adapted to switch and output two types of video signals including vertical synchronizing signals with their respective different phases (e.g. a switching apparatus or a videocassette recorder integrated optical disk apparatus adapted to switch and output two types of input video signals, or an apparatus further including a function capable of recording and reproducing a video signal using a hard disk drive as a recording medium).

Although there has heretofore been described the case where the first and second solid video signals represent a black solid image, the signals can represent a solid image of another color (e.g. a blue solid image).

In addition, although there has heretofore been described the case where the first and second solid video signals are sent for 300 ms, the signals can be sent for any other time period (e.g. 200 ms) as long as the period is longer than the time period of a vertical wobble of the screen in the TV receiver 61 when video signals including vertical synchronizing signals with their respective different phases are input.

## Claims

1. A videocassette recorder integrated optical disk apparatus comprising:
a tape recording and reproducing section for recording and reproducing a video signal using a videocassette tape as a recording medium;
a disk recording and reproducing section for recording and reproducing a video signal using a DVD as a recording medium; and
an output changeover switch including a first input terminal to which a first video signal output from said tape recording and reproducing section is guided and a second input terminal to which a second video signal output from said disk recording and reproducing section is guided, said switch being adapted to switch an output video signal between said first video signal and said second video signal,
said apparatus further comprising:
a first signal switching section for switching a signal to be sent to said first input terminal between a first solid video signal that includes a synchronizing signal having the same timing as a synchronizing signal of said first video signal as well as represents a black solid image and said first video signal; and
a second signal switching section for switching a signal to be sent to said second input terminal between a second solid video signal that includes a synchronizing signal having the same timing as a synchronizing signal of said second video signal as well as represents a black solid image and said second video signal,
said first signal switching section being adapted to send said first solid video signal to said first input terminal for a predetermined time period to subsequently switch to said first video signal when a video signal to be output from said output changeover switch is switched from said second video signal to said first video signal,
said second signal switching section being adapted to send said second solid video signal to said second input terminal for a predetermined time period to subsequently switch to said second video signal when a video signal to be output from said output changeover switch is switched from said first video signal to said second video signal,
said tape recording and reproducing section sending a digital level synchronizing signal, the level of which changes between H and L for digital signal circuits,
said first signal switching section comprising:
a solid signal generating section for generating and sending said first solid video signal based on said digital level synchronizing signal; and
a solid inserting switch for switching a signal to be sent to said first input terminal between said first solid video signal sent from said solid signal generating section and said first video signal,
said solid signal generating section comprising:
a first resistor with said digital level synchronizing signal being guided to one end thereof;
a transistor with the base connected with the other end of said first resistor and the emitter grounded;
a second resistor connected between the collector of said transistor and a positive power supply;
a third resistor with one end thereof connected to the collector of said transistor;
a fourth resistor with one end thereof connected to said positive power supply and the other end thereof connected to the other end of said third resistor; and
a fifth resistor with one end thereof grounded and the other end thereof connected to the other end of said third resistor,
said first solid video signal being sent from the other end of said third resistor.

2. A videocassette recorder integrated optical disk apparatus comprising:
a tape recording and reproducing section for recording and reproducing a video signal using a videocassette tape as a recording medium;
a disk recording and reproducing section for recording and reproducing a video signal using a DVD as a recording medium; and
an output changeover switch including a first input terminal to which a first video signal output from said tape recording and reproducing section is guided and a second input terminal to which a second video signal output from said disk recording and reproducing section is guided, said switch being adapted to switch an output video signal between said first video signal and said second video signal,
said apparatus further comprising:
a first signal switching section for switching a signal to be sent to said first input terminal between a first solid video signal that includes a synchronizing signal having the same timing as a synchronizing signal of said first video signal as well as represents a solid image and said first video signal; and
a second signal switching section for switching a signal to be sent to said second input terminal between a second solid video signal that includes a synchronizing signal having the same timing as a synchronizing signal of said second video signal as well as represents a solid image and said second video signal,
said first signal switching section being adapted to send said first solid video signal to said first input terminal for a predetermined time period to subsequently switch to said first video signal when a video signal to be output from said output changeover switch is switched from said second video signal to said first video signal,
said second signal switching section being adapted to send said second solid video signal to said second input terminal for a predetermined time period to subsequently switch to said second video signal when a video signal to be output from said output changeover switch is switched from said first video signal to said second video signal.

3. The videocassette recorder integrated optical disk apparatus according to claim 2, wherein
said first solid video signal represents a black solid image and said second solid video signal also represents a black solid image.

4. The videocassette recorder integrated optical disk apparatus according to claim 2 or 3, wherein
said tape recording and reproducing section sends a digital level synchronizing signal, the level of which changes between H and L for digital signal circuits, and wherein
said first signal switching section comprises:
a solid signal generating section for generating and sending said first solid video signal based on said digital level synchronizing signal; and
a solid inserting switch for switching a signal to be sent to said first input terminal between said first solid video signal sent from said solid signal generating section and said first video signal.

5. The videocassette recorder integrated optical disk apparatus according to claim 4, wherein
said solid signal generating section comprises:
a first resistor with said digital level synchronizing signal being guided to one end thereof;
a transistor with the base connected with the other end of said first resistor and the emitter grounded;
a second resistor connected between the collector of said transistor and a positive power supply;
a third resistor with one end thereof connected to the collector of said transistor;
a fourth resistor with one end thereof connected to said positive power supply and the other end thereof connected to the other end of said third resistor; and
a fifth resistor with one end thereof grounded and the other end thereof connected to the other end of said third resistor,
said first solid video signal being sent from the other end of said third resistor.

6. A video signal apparatus comprising an output changeover switch including a first input terminal to which a first video signal is guided and a second input terminal to which a second video signal is guided, said switch being adapted to switch an output video signal between said first video signal and said second video signal,
said apparatus further comprising:
a first signal switching section for switching a signal to be sent to said first input terminal between a first solid video signal that includes a synchronizing signal having the same timing as a synchronizing signal of said first video signal as well as represents a solid image and said first video signal; and
a second signal switching section for switching a signal to be sent to said second input terminal between a second solid video signal that includes a synchronizing signal having the same timing as a synchronizing signal of said second video signal as well as represents a solid image and said second video signal,
said first signal switching section being adapted to send said first solid video signal to said first input terminal for a predetermined time period to subsequently switch to said first video signal when a video signal to be output from said output changeover switch is switched from said second video signal to said first video signal,
said second signal switching section being adapted to send said second solid video signal to said second input terminal for a predetermined time period to subsequently switch to said second video signal when a video signal to be output from said output changeover switch is switched from said first video signal to said second video signal.
